Europäisches Patentamt

European Patent Office

Office européen des brevets

(19)

(11) EP 0 659 132 B1

(12) EUROPÄISCHE PATENTSCHRIFT

(45) Veröffentlichungstag und Bekanntmachung des Hinweises auf die Patenterteilung:
20.11.1996 Patentblatt 1996/47

(21) Anmeldenummer: 93918911.4

(22) Anmeldetag: 24.08.1993

(51) Int. Cl.$^6$: **B60T 8/00**

(86) Internationale Anmeldenummer:
PCT/DE93/00770

(87) Internationale Veröffentlichungsnummer:
WO 94/05534 (17.03.1994 Gazette 1994/07)

(54) **VERFAHREN ZUR EINSTELLUNG VON SOLLBREMSMOMENTEN**

METHOD OF ESTABLISHING REFERENCE BRAKING TORQUES

PROCEDE POUR LA DETERMINATION DE COUPLES NOMINAUX DE FREINAGE

(84) Benannte Vertragsstaaten:
**CH DE FR GB LI**

(30) Priorität: **09.09.1992 DE 4230101**

(43) Veröffentlichungstag der Anmeldung:
**28.06.1995 Patentblatt 1995/26**

(73) Patentinhaber: **ROBERT BOSCH GMBH**
**70442 Stuttgart (DE)**

(72) Erfinder:
• **KOST, Friedrich**
**D-70806 Kornwestheim (DE)**
• **HARTMANN, Uwe**
**D-70193 Stuttgart (DE)**
• **WEISS, Karl-Josef**
**D-70193 Stuttgart (DE)**

• **EHRET, Thomas**
**D-77960 Seelbach (DE)**

(74) Vertreter: **Müller, Georg et al**
**Robert Bosch GmbH**
**Postfach 30 02 20**
**70442 Stuttgart (DE)**

(56) Entgegenhaltungen:
**EP-A- 0 106 112          WO-A-92/05986**
**DE-A- 3 635 095**

• **BURCKHARDT 'Fahrwerktechnik:**
**Bremsdynamik und Pkw-Bremsanlagen' 1991 ,**
**VOGEL BUCHVERLAG , WüRZBURG (DE) siehe**
**Abschnitt 3.8 'Einfluss der Motorbremswirkung',**
**seite 101 - seite 111**

**Beschreibung**

Stand der Technik

Aus der DE-A1 40 30 724 ist ein Regelsystem bekannt, bei dem Sollschlupfwerte für die Räder eines Fahrzeugs ermittelt werden. Die Sollschlupfwerte können aus Schlupfanteilen bestehen, die von einem ABS und von einer Fahrdynamikregelung ermittelt werden. Aus den Sollschlupfwerten und den Istschlupfwerten werden dann Sollbremsmomente und damit Sollbremsdrücke für die Räder ermittelt. Diese können dann in Ventilansteuerzeiten umgesetzt werden.

In der EP-A1 0 106 112 ist ein Antiblockierregelsystem für ein frontgetriebenes Fahrzeug beschrieben, bei dem im Falle einer Antiblockierregelung die Bremswirkung des Motors zeitweise wenigstens verkleinert wird. Durch die während der Antiblockierregelung zumindest zeitweise Verkleinerung bzw. Eliminierung des Motorschleppmomentes wird vermieden, daß es beispielsweise beim Fahren auf Untergrund mit niedrigem Haftreibwert, in den Hinterradbremsen unter Umständen zu einem vollständigen Abbau des Bremsdruckes kommt. Würde solch ein Fall eintreten, so könnten die Hinterradbremsen keinen Beitrag mehr zur Bremsung leisten. Der für die Reduzierung des Motorschleppmomentes erforderliche Eingriff erfolgt in dem beschriebenen Antiblockiersystem beispielsweise durch Ansteuerung der Kupplung, wodurch die Momentenübertragung vom Motor zu den Rädern beeinflußt wird. Eine Berechnung des Wertes, auf den das Motorschleppmoment im Falle eines Eingriffes bei diesem Antiblockiersystem reduziert werden soll, findet bei diesem System nicht statt.

Vorteile der Erfindung

Bei der Erfindung werden die vom ABS und dem Fahrdynamikregler berechneten Sollbremsmomente an den Rädern auf ein den Antriebsrädern gemeinsames Sollmotormoment und individuelle Restmomenten verteilt. Es erfolgt also eine Regelung des Schleppmoments. Wird nicht gebremst (Vordruck $P_{vor}$ = 0) so erfolgt automatisch "select low"-Regelung. Bei großem Vordruck $P_{vor}$ > a verschwindet das Motormoment, was sich wiederum günstig auf die Schlupfregelung auswirkt. Es ergibt sich bei der Erfindung, daß der Motor die niederfrequente langsame Regelung der Räder übernimmt während die schnelle Regelung über die Bremse erfolgt.

Ausgangsgröße des unterlagerten Bremsschlupfreglers in der Fahrdynamikregelung ist das am jeweiligen Rad angreifende Sollbremsmoment. Bei den nichtgetriebenen Rädern kann dieses Moment für jedes Rad unabhängig nur über die Bremszangen eingestellt werden.

Bei den angetriebenen Rädern ist im eingekuppelten Zustand zusätzlich noch das Motorschleppmoment, in bestimmten Grenzen, als Stellgröße möglich. Das Schleppmoment kann dabei nicht individuell auf die angetriebenen Räder verteilt werden.

Das bedeutet, daß eine Radschlupfregelung nur mit dem Motor innerhalb der Fahrdynamikregelung eine "select low"-Regelung ist.

Steht der Fahrer zusätzlich auf der Bremse oder erfolgt ein aktiver Bremseneingriff, wird der Radschlupf über einen gemeinsamen Teil mit dem Motormoment, und der Rest individuell mit dem Bremsmoment geregelt.

Die Verteilung des Sollmomentes auf Motor und Bremse und deren Berechnung ist Gegenstand dieser Erfindung.

Die Erfindung beruht auf den folgenden Überlegungen:

Für ein an einer Achse angetriebenes Fahrzeug werden die Gleichungen für die Verteilung des Sollbremsmoments abgeleitet. Prinzipiell ist die Methode auch für allradgetriebene Fahrzeuge verwendbar.

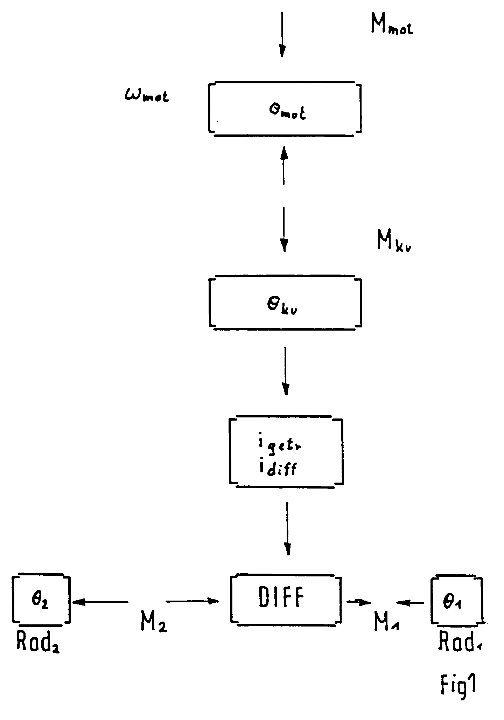

Figur 1 zeigt das Modell des Antriebstranges, das für die Berechnung des Sollmotormoments benutzt wird.

Für eine nicht rutschende Kupplung ergibt sich folgendes Momentengleichgewicht:

$$M_1 + M_2 = i^* ( M_{mot} - d/dt(\omega_{mot})^* \theta_{ges})$$

mit:

$$i = i_g {}^* i_d$$

$$\theta_{ges} = \theta_{mot} + \theta_{ku}$$

Hierin sind:

M1, M2 Antriebsmomente an den Rädern
$i_g$ Getriebeübersetzung
$i_d$ Übersetzung des Differentials
$\theta_m$ Motorträgheitsmoment
$\theta_k$ Kupplungsträgheitsmoment
$\omega_{mot}$ Motordrehzahl.
     Weiterhin gilt:

$$M_1 = M_2 = M_{aRad}$$

$$d/dt(\omega_{mot}) = i {}^* d/dt(v_f)/r = i {}^* bx/r$$

mit

$V_f$ :       Fahrzeuggeschwindigkeit
bx :       Fahrzeugverzögerung
r :       Radradius

damit gilt für das Schleppmoment bzw. das Antriebsmoment $M_{aRad}$ am Rad folgende Beziehung:

$$M_{aRad} = 0.5 {}^* i^* ( M_{mot} - i^* \theta_{ges} {}^* bx/r)$$

Der Radschlupfregler hat aufgrund von Sollschlupfabweichungen die Sollmomente $M_{soll1}$ bzw. $M_{soll2}$ für die angetriebene Achse berechnet.

Für das kleinere der beiden Momente

$$M_{sollmin} = min (M_{soll1}, M_{soll2})$$

wird ein vom Motor zu realisierendes Sollmoment nach folgender Formel berechnet:

$$M_{motsoll} = K * M_{sollmin}$$

Hierin ist

$$K = (a-P_{vor})/a \quad 0 < k <= 1$$

$P_{vor}$ :      Vordruck des Fahrers
a :      wählbarer Parameter

Damit ergibt sich das Motormoment zu:

$$M_{mot} = 2 * M_{motsoll} / i+ i* \theta_{ges} * bx/r$$

Die verbleibenden Restmomente werden über die Solldrücke $P_{soll1}$ bzw. $P_{soll2}$ in den Radbremszylindern realisiert.

$$P_{soll1} = (M_{soll1}-M_{motsoll})/CP_1$$

$$P_{soll2} = (M_{soll2}-M_{motsoll})/CP_2$$

mit $CP_{1/2}$ = Bremsmomentübersetzungen

Figurenbeschreibung

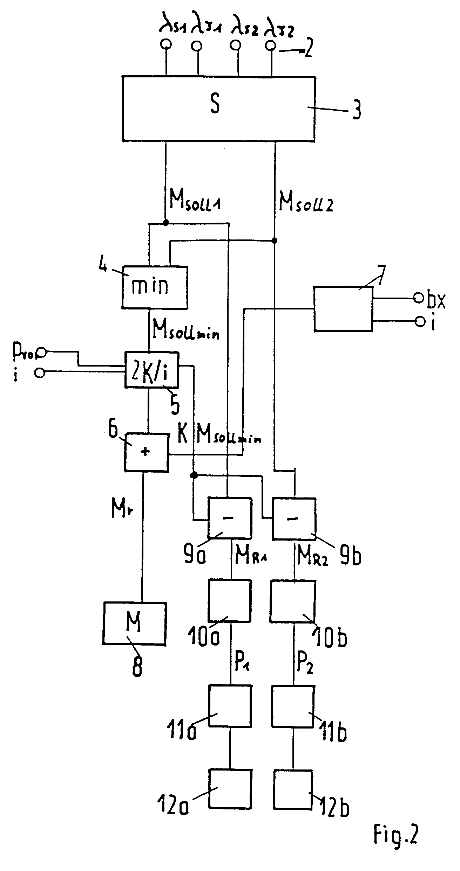

In Figur 2 ist ein Blockschaltbild eines Ausführungsbeispiels der Erfindung gezeigt. An Klemmen 2 werden in einem bekannten Fahrdynamikregler und einem ABS ermittelte Soll- und Istbremsschlüpfe $\lambda_{s1}$, $\lambda_{i1}$ und $\lambda_{s2}$, $\lambda_{i2}$ der beiden angetriebenen Räder (1 bzw. 2) einem Regler 3 zugeführt. Dieser ermittelt die Sollbremsmomente $M_{soll1}$ und $M_{soll2}$ der beiden Räder. In einem Block 4 wird das kleinere Moment ausgewählt. In einem weiteren Block 5 wird der Ausdruck $2K/i * M_{sollmin}$ gebildet zu dem im Block 6 der im Block 7 gewonnene Summand $i * \theta_{yes} * bx/r$ addiert wird. Die Summe beinflußt das Motormoment (Block 8) und muß vom Motor über die entsprechende Drosselklappenstellung realisiert werden.

In Blöcken 9a und 9b werden die Differenzen $M_{R1} = M_{soll1} - KM_{sollmin}$ und $M_{R2} = M_{soll2} - KM_{sollmin}$ gebildet, die in Blöcken 10a und 10b in Bremsdrücke $P_1$ und $P_2$ umgesetzt werden. Diese Signale werden über ein inverses Hydraulikmodell 11a bzw. 11b Bremsdrucksteuerventilen 12a und 12b zugeführt, wodurch die Restmomente auf die Räder aufgebracht werden. Ein solches inverses Hydraulikmodell ist in der DE-A1-40 30 724 beschrieben.

**Patentansprüche**

1. Verfahren zur Einstellung von Sollbremsmomenten $M_{soll1}$ und $M_{soll2}$ an den angetriebenen Rädern eines Kraftfahrzeugs, dadurch gekennzeichnet, daß das kleinere Sollbremsmoment ($M_{soll1}$ oder $M_{soll2}$) dazu benutzt wird, ein Motorbremsmoment entsprechender Größe einzustellen und daß die Restbremsmomente $M_{R1}$ und $M_{R2}$ durch Bremsdruckbeaufschlagung erzeugt werden.

2. Verfahren zur Einstellung von Sollbremsmomenten ($M_{soll1}$ und $M_{soll2}$) an den angetriebenen Rädern eines Kraftfahrzeugs, dadurch gekennzeichnet, daß das kleinste der Sollbremsmomente $M_{sollmin}$ ausgewählt wird, daß über eine Motorregelung ein Motormoment

$$M_{mot} = 2 * KM_{sollmin}/i + i * \theta_{yes} * bx/r.$$

eingstellt wird, wobei i das Produkt aus Getriebeübersetzung und Übersetzung des Differentials, $\theta_{ges}$ die Summe aus den Trägheitsmomenten des Motors und des Getriebes, bx die Fahrzeugverzögerung, r der Radradius und K eine Größe zwischen 0 und 1 ist und mit steigendem Vordruck kleiner wird, ist und daß die Restmomente $M_{soll1}$ - $M_{sollmin}$ und $M_{soll2}$ - $M_{sollmin}$ in entsprechende Bremsdrücke P1 und P2 umgesetzt werden.

**Claims**

1. Method for setting target braking torques $M_{set1}$ and $M_{set2}$ at the driven wheels of a motor vehicle, characterized in that the smaller target braking torque ($M_{set1}$ or $M_{set2}$) is used to set an engine braking torque of an appropriate magnitude and in that the residual braking torques $M_{R1}$ and $M_{R2}$ are produced by the application of braking pressure.

2. Method for setting target braking torques ($M_{set1}$ and $M_{set2}$) at the driven wheels of a motor vehicle, characterized in that the smallest of the target braking torques $M_{setmin}$ is selected, in that, by means of an engine control, an engine torque

$$M_{eng} = 2 * KM_{setmin}/i + i * \theta_{ges} * bx/r$$

is set, i being the product of the gear transmission ratio and the transmission ratio of the differential, $\theta_{ges}$ being the sum of the moments of inertia of the engine and the gearbox, bx being the vehicle deceleration, r being the radius of the wheel and K being a variable between 0 and 1 and becoming smaller with increasing admission pressure, and in that the residual torques $M_{set1}$-$M_{setmin}$ and $M_{set2}$-$M_{setmin}$ are converted into appropriate braking pressures P1 and P2.

**Revendications**

1. Procédé pour régler les couples de frein de consigne ($M_{cons11}$) et ($M_{cons12}$) des roues motrices d'un véhicule automobile,
   caractérisé en ce que
   le plus petit couple de frein de consigne ($M_{cons11}$) ou ($M_{cons12}$) sert à régler l'amplitude d'un couple de frein moteur et les couples de £rein résiduels ($M_{R1}$) et ($M_{R2}$) sont générés par la mise en oeuvre de la pression de frein.

2. Procédé de réglage des couples de frein de consigne ($M_{cons11}$) et ($M_{cons12}$) des roues motrices d'un véhicule automobile,
   caractérisé en ce qu'
   on sélectionne le plus petit des couples de frein de consigne ($M_{consmin}$) qui règle un couple moteur par une régulation de moteur

   $$M_{mot} = 2 \times K M_{consmin}/i + i * \theta_{tot} * bx/r,$$

   | | |
   |---|---|
   | $i$ : | représentant le produit du rapport de transmission et de la démultiplication du différentiel, |
   | $\theta_{tot}$ : | somme des moments d'inertie du moteur et de la transmission |
   | $bx$ : | décélération du véhicule |
   | $r$ : | rayon d'une roue |
   | $K$ : | grandeur comprise entre 0 et 1 et diminuant en fonction de la pression amont, |

   et les couples résiduels $M_{cons11}$ - $M_{consmin}$ ainsi que $M_{cons12}$ et $M_{consmin}$ sont convertis en des pressions de frein $P_1$, $P_2$ respectives.

$M_{mot}$

$\omega_{mot}$

$\Theta_{mot}$

$M_{kv}$

$\Theta_{kv}$

$i_{getr}$
$i_{diff}$

$\Theta_2$        DIFF        $\Theta_1$

$M_2$                    $M_1$

$\overline{Rod_2}$                    $\overline{Rod_1}$

Fig 1

$\lambda_{S1}$ $\lambda_{J1}$ $\lambda_{S2}$ $\lambda_{J2}$ →2

S 3

$M_{soll1}$ $M_{soll2}$

4 min 7

$M_{sollmin}$ bx

$p_{ro}$ i 2K/i i

5

6 K $M_{sollmin}$

+

$M_r$ − − 9b

9a $M_{R1}$ $M_{R2}$

10a 10b

M $P_1$ $P_2$

8 11a 11b

12a 12b

Fig.2